Europäisches Patentamt

(19) European Patent Office     (11) Publication number:     **0 144 111**
Office européen des brevets                              **B1**

(12)          **EUROPEAN PATENT SPECIFICATION**

(45) Date of publication of patent specification: **01.04.87**     (51) Int. Cl.⁴: **A 47 J 31/54**

(21) Application number: **84201757.6**

(22) Date of filing: **29.11.84**

(54) **Apparatus for preparing beverages comprising scale indication means.**

(30) Priority: **30.11.83 NL 8304101**

(43) Date of publication of application:
**12.06.85 Bulletin 85/24**

(45) Publication of the grant of the patent:
**01.04.87 Bulletin 87/14**

(84) Designated Contracting States:
**DE GB NL**

(56) References cited:
**DE-A-2 843 655**
**DE-B-2 556 231**
**NL-A-8 200 643**

(73) Proprietor: **VERHEIJEN B.V.**
**Pascalstraat 20 Postbus 188**
**NL-1700 AD Heerhugowaard (NL)**

(72) Inventor: **Verheyen, Jan Jiles**
**De Rookamer 18**
**NL-1852 EC Heiloo (NL)**

(74) Representative: **van der Beek, George Frans**
**et al**
**Nederlandsch Octrooibureau Johan de Wittlaan**
**15 P.O. Box 29720**
**NL-2502 LS 's-Gravenhage (NL)**

Courier Press, Leamington Spa, England.

## Description

The invention relates to an apparatus for preparing beverages, comprising heating means and a rising pipe, extending upwards between said heating means and a spraying head, a measuring element receiving at least part of the water flowing out of said rising pipe, said measuring element comprising a flat perforated section, an elevated wall section and an electrical detection circuit.

An apparatus of this type is known from the patent publication DE—A—2843655. After a longer or shorter period of use and dependent on the hardness of the water in said apparatus, and especially in the heating unit and in the rising tube a deposit will be developed, generally indicated by the term "scale". Because of said scale the flow passage through the heater unit and to a somewhat lesser extent the flow passage through the rising tube becomes narrower and furthermore the heat transfer from the heat source in the heater unit to the water in said heater unit will deteriorate. If the scale deposit grows too thick, then the temperature in the heater unit may rise to such an extent that there is a real danger of damaging the heater unit. Therefore in the direction of use of such an apparatus there is generally an instruction to descale such an apparatus with regularly intervals, for instance by means of a commercially available descaling agent. However, such a descaling treatment has to be carried out with a certain regularity to keep the apparatus in a good condition. In practice, however, said treatment is carried out much too late or is even forgotten at all resulting into harmful consequences for the apparatus.

In the prior art apparatus the scale indication means are embodied as a measuring chamber comprising a flat perforated bottom wall, the upper end of said rising pipe opening into a first section of said chamber. A second section of said chamber separated from the first section by a separating wall with at least one passage opening comprises a floating element. If there is no or no significant scale deposition then the passages in the perforated bottom section will open and all the water flowing into said chamber will flow out through said perforated plate. However, if the scale deposit has grown too thick such that the water is substantially unable to flow out of said measuring chamber, then the floating body will at least temporarily maintain a high level which, through a magnetic device in said floating element, causes the activation of an external reed relay resulting into a warning signal.

The flat perforated section of this prior art apparatus occupies the whole outlet opening of the spraying head. That implies that the flow of water through the perforated plate section will become significantly reduced even if the scale deposition has not grown to a significant extent. In case the perforations become completely clogged the water flow stops completely resulting into a relatively dangerous situation because as result of the still functioning heating means the water vapour pressure into the measuring chamber may rise to an unacceptable level.

As the scale deposit grows and the flow passages in the perforated bottom wall become clogged at least partly, then there will be also scale deposited within the measuring chamber. To prevent blocking of the floating element within said measuring chamber caused for instance by tilting of said floating element, the cross sectional dimension of said floating element has to be approximately equal to the inner dimension of said measuring chamber. Furthermore a defined activation of an eventual external reed relay calls for a floating element which in the diametrical direction is only able to move within a narrow delimited area, which implies that the floating element must have relatively accurate cross sectional dimensions. Therefore the chance that the flating element will become blocked into said measuring chamber if there is a growing scale deposit onto the inner wall of said measuring tube, will certainly not be inconceivable.

During the supply of hot water a relatively turbulent flow of hot water and steam bubbles will be propelled upwards through said rising tube and part of said water will find its way into the measuring chamber. Therefore also the floating element into said measuring chamber will be constantly moving during the water supply period, which even in the scale-free condition may cause the activation of the warning signal with irregular intervals, which is highly undesirable.

If there is a certain degree of scale deposition resulting into a slowly falling water level in the measuring chamber after finishing the supply of water through the rising tube, the user receives only a warning signal during a relatively short time period. That implies that the user is more or less obliged to wait near the apparatus until the supply of water has stopped to receive a warning signal through said reed relay which will be activated for a relatively short time period. Only when the scale deposition has grown to such an extent that the perforated plate in the measuring tube is completely clogged, which situation calls for a direct treatment and in fact has to be avoided, the floating element will become trapped at the highest level and the reed relay will be activated continuously after finishing the hot water supply operation.

An object of the invention is now to avoid the above indicated disadvantages and to provide improved scale indication means for an apparatus for preparing beverages.

In agreement with said object the invention now provides an apparatus of the type described in the heading part, characterized in that the heating means is a flow heater, that the measuring element is positioned in the outlet opening of said sprayed head, that the outlet opening of the spraying head is only partly occupied by said measuring element being cup-shaped and that inside the spraying head at least one electrode is secured, the lower end thereof positioned within the cup-shaped element underneath the upper edge of said elevated wall section, which electrode is electrically connected to said electrical detection circuit.

The water flowing out of the rising tube will in this apparatus be received at least partly in said cup-shaped element and will flow either through the perforations in the bottom part of said element or, in case said perforations are more or less clogged by scale deposition and are not able to pass said water with a sufficient flow rate or are not able to pass water at all, the water will flow over the edge of the wall section through further parts of the spraying head. The fixed electrode can cause the generation of a signal in the detection circuit without the necessity to use a movable floating element with all its inherent disadvantages. From a constructional standpoint this is a very simple solution which can be realized with restricted means and without moving parts.

Especially in case the invention is applicated to already existing apparatuses, but also if the invention is applicated to new apparatuses it is preferred that the spraying head comprises a perforated plate, covering the whole outlet opening of said spraying head, a section of said plate being provided with smaller perforations, which section embodies said flat section of the cup-shaped element, whereby the elevated wall section of said cup-shaped element is secured to the perforated plate around said plate section. In case the invention is applicated to already existing apparatuses then it is only necessary to replace the already present perforated plate in the spraying head by another perforated plate onto which the elevated wall section is secured, for instance by brazing or soldering, such that said elevated wall surrounds a plate section with relatively small perforations.

In apparatuses for preparing beverages plastics are used increasingly for manufacturing various parts, amongst others for manufacturing at least parts of spraying heads. In that case it is according to the invention preferred that two electrodes are installed, both electrically connected to the electrical detection circuit.

To prevent the generation of series of relatively short alarm signals during the normal operation of the apparatus, i.e. in the normal water supply condition, it is preferred to applicate the invention to an apparatus which comprises a control unit for controlling a water supply unit adapted to supply a predetermined amount of water through the flow heater, in which case electrode will according to the invention only switched into the active condition by the electrical detection circuit after said control unit has finished the supply of water from the water supply unit to the flow heater. In that case it is prevented that the stream of hot water and vapour bubbles, which is also turbulent within the spraying head, activates the detection now and then through said electrodes.

To be able to take into account an eventually small scale deposition not directly necessitating a cleaning treatment, it is preferred that the control unit comprises a time measuring circuit switching the electrode(s) only active after the expiration of a predetermined time period after the control unit has finished delivering water from the water supply unit to the flow heater.

In case the scale deposition has progressed to such an extent that the user has to take measures, but on the other hand the perforations in the cup-shaped element are still not completely clogged, then the water level within said cup-shaped element will fall slowly after finishing the water supply. That could give rise to a situation in which the initial alarm signal will disappear without being monitored by the user. It is therefore preferred that the detection circuit becomes activated by the electrode signals to generate an alarm signal, which alarm signal only disappears if the user operates thereto destined means. Such means can be embodied for instance as a push button for resetting the detection circuit if said push button is operated by the user.

To avoid removal of the cup-shaped element out of the spraying head so that no alarm signal will be generated, and to avoid furthermore that the user only cleans said cup-shaped element without removing the scale deposition in the flow heater and in the rising tube, it is preferred that the cup-shaped element is embodied such that removal from the spraying head is impossible. Therewith the user is more or less forced to take measures for removing the scale deposition as soon as that becomes necessary.

The invention will now be explained in more detail with reference to the attached drawings.

Figure 1 illustrates an apparatus for preparing beverages, for instance coffee or tea.

Figure 2 illustrates in more detail the spraying head according to the invention, applicated in the apparatus of Figure 1.

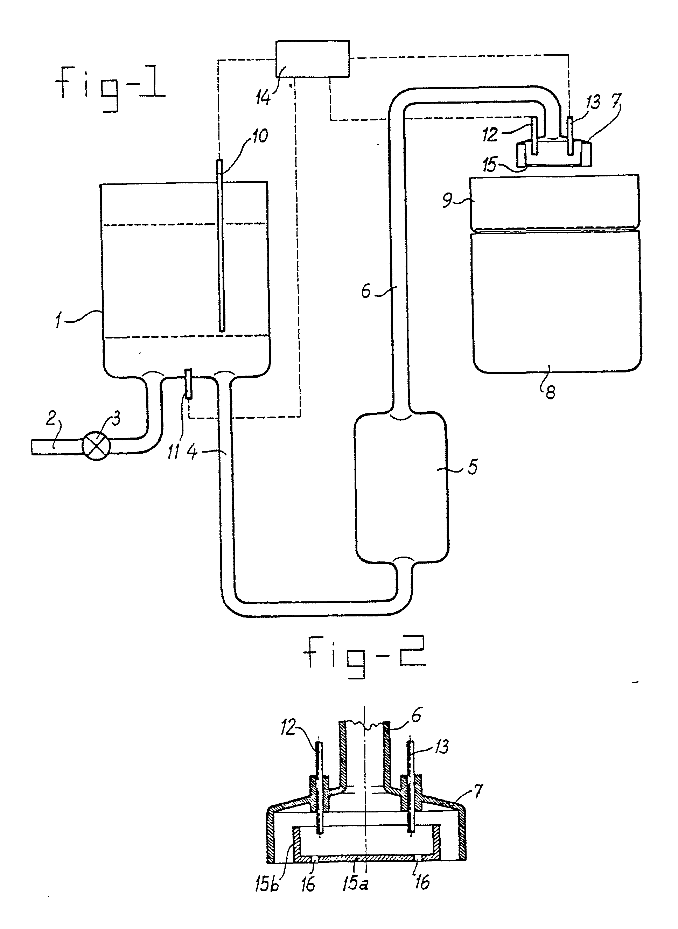

Figure 1 illustrates an apparatus for preparing beverages such as coffee or tea. The apparatus comprises a cold water reservoir 1, to which through the water conduit 2 and the valve 3 cold water can be supplied. On the other hand said cold water reservoir 1 is connected to the flow heater 5 through a water supply conduit 4, which flow heater is at its upper end connected to a hot water rising pipe 6 ending inside the spraying head 7. A beverage accumulating reservoir 8 with a filter unit 9 on top of it is positioned underneath the spraying head, whereby said filter unit is destined to receive ground coffee. An electrode 10 is positioned into the cold water reservoir 1 to monitor a predetermined low level in the cold water reservoir. A further electrode 11 near the bottom wall of the cold water reservoir is destined to generate a detection signal in case the water level in said cold water reservoir falls under the level monitored by said electrode 11. Said electrode 11 forms part of a dry-boil-safety circuit of the apparatus. Furthermore in the spraying head 7 the electrodes 12 and 13 are secured forming part of the scale indication means according to the invention. All electrodes 10, 11, 12 and 13 are connected to a control unit 14. The cup-shaped element 15, which will be described in more detail with reference to Figure 2, is installed inside the spraying head 7.

Figure 2 shows more details of the spraying head. The spraying head 7 is in this case formed as an integral part of the rising pipe end section, but it will be clear that also other constructions with separate elements are possible. In the spraying head 7 the cup-shaped element 15 is installed comprising a bottom plate 15a with perforations openings 16 and an elevated wall section 15b. The lower ends of the electrodes 12 and 13 are positioned within said cup-shaped element at a level underneath the upper edge of the wall section 15b. The cup-shaped element covers only a part of the outlet opening of the spraying head 7. The other part of the outlet opening around said cup-shaped element may be occupied by a plate section with larger perforation openings than the perforation openings 16 in said cup-shaped element. Such a further plate section is not illustrated in detail in the embodiment shown in Figure 2.

The apparatus shown in Figures functions as follows. By filling the cold water reservoir 1 one or more times with a predetermined volume of water and supplying said water to the flow heater 5 a predetermined total amount of water can be measured and supplied through the conduit 4 to the flow heater 5. In said flow heater 5 the cold water is heated to about boiling temperature and the hot water will be delivered through the rising pipe 6 to the spraying head 7. In said spraying head 7 the water is received in the cup-shaped element 15. The hot water can flow out of said cup-shaped element through the perforation openings 16 and flows from there on the ground coffee in the filter unit 9 whereby the extract is dripping down and received in the reservoir 8.

During operation of the apparatus scale will be deposited in the flow heater 5, especially in the upper section thereof as well as in the rising pipe 6 and the spraying head 7. As result thereof the perforations 16 in the cup-shaped element 15 will gradually become narrower and will be clogged ultimately. The water coming out of the rising pipe 6, which initially could flow through the perforations 16 out of the spraying head is now forced to flow more and more over the edge of the cup-shaped element 15 to leave the spraying head through the remaining part of the outlet opening. That implies that with progressing scale deposition the water level in the cup-shaped element 15 will rise and said water level is detected by the electrodes 12 and 13. Said electrodes are coupled to the control unit 14, comprising a detection circuit. Preferably said detection circuit is only activated after a predetermined amount of cold water is supplied to the flow heater 5. The electrode 10 indicates the moment at which the water in the cold water reservoir 1 reaches a certain low level, at which moment the apparatus will be switched off by the control unit 14. At that moment the electrodes 12 and 13 can be switched active to monitor the water level in the cup-shaped element 15. Preferably said control unit 14 comprises furthermore a time measuring circuit for realizing a time delay because at the very moments, the apparatus is switched off, there is still a turbulent moving and bubbling water stream present in the rising pipe 6 and in the spraying head 7. If after a predetermined time period there is still water present in the cup-shaped element 15, then this water will be monitored by the electrodes 12 and 13 and the detection circuit will as a result thereof generate an alarm signal. Preferably the control unit 14 is embodied such that the detection circuit starts to generate said alarm signal and will continue generating. The alarm signal can be switched off for instance by means of a push button to be pushed by the user for resetting the detection circuit. Therewith it is prevented that the user will not observe the alarm signal and will not become aware of the progressing scale deposition.

In the illustrated embodiment two electrodes 12 and 13 are present. However, it is also possible to use only one electrode if at least the cup-shaped element 15 is made of an electrically conducting material and can be connected to the control unit 14.

It is furthermore remarked that the apparatus illustrated in Figure 1 is only an example of an apparatus for preparing beverages in which the invention can be applicated. Furthermore the invention as claimed can be applicated in many other types of beverage preparing apparatuses with the same advantages.

**Claims**

1. Apparatus for preparing beverages, comprising heating means and a rising pipe (6), extending upwards between said heating means and a spraying head (7), a measuring element (15) receiving at least part of the water flowing out of said rising pipe, said measuring element comprising a flat perforated section (15a), an elevated wall section (15b), and an electrical detection circuit (14), characterized in that the heating means is a flow heater (5), that the measuring element is positioned in the outlet opening of said spraying head (7), that the outlet opening of the spraying head (7) is only partly occupied by said measuring element being cup-shaped and that inside the spraying head at least one electrode (12, 13) is secured, the lower end thereof positioned within the cup-shaped element (15) underneath the upper edge of said elevated wall section, which electrode (12, 13) is electrically connected to said electrical detection circuit (14).

2. Apparatus according to claim 1, characterized in that the spraying head comprises a perforated plate, covering the whole outlet opening of said spraying head (7), a section of said plate being provided with smaller perforations (16), which section embodies said flat section of the cup-shaped element (15), whereby the elevated wall section of said cup-shaped element (15) is secured to the perforated plate around said plate section.

3. Apparatus according to any of the claims 1 or 2, characterized in that at least part of the spraying head is made of an electrically non-conducting material and that there are two electrodes present (12, 13) both connected to said electrical detection circuit (14).

4. Apparatus according to one of the preceding claims, comprising a water supply unit (1, 3, 10) by means of which a predetermined volume of water can be delivered to the flow heater (5) under control of a control unit (14), characterized in that the electrical electrode(s) (12, 13) are only activated by the electrical detection circuit (14) after the delivering of said predetermined volume of water from the water supply unit to the flow heater (5) is finished by said control unit (14).

5. Apparatus according to claim 4, characterized in that the control unit (14) comprises a time measuring circuit for activating the electrode(s) (12, 13) only after the lapse of a predetermined delay period after the delivering of water from the water supply unit (1, 3, 10) to the flow heater (5) is finished by the control unit (14).

6. Apparatus according to one of the preceding claims, characterized in that the detection circuit is activated by the electrode signals to generate an alarm signal, the generation of said alarm signal being continued until the user resets the detection circuit by thereto destined means.

7. Apparatus according to one of the preceding claims, characterized in that the cup-shaped element (15) is integrally formed with said spraying head.

**Patentansprüche**

1. Getränkezubereitungsgerät, das eine Heizeinrichtung und ein Steigrohr (6) aufweist, das sich zwischen der Heizeinrichtung und einem Sprühkopf (7) nach oben erstreckt, ferner ein Meßelement (15), das wenigstens teilweise das aus dem Steigrohr ausströmende Wasser aufnimmt und welches einen flachen perforierten Abschnitt (15a), einen erhabenen Wandabschnitt (15b) und eine elektrische Detektorschaltung (14) aufweist, dadurch gekennzeichnet, daß die Heizeinrichtung ein Durchflußerhitzer (5) ist, daß das Meßelement in der Auslaßöffnung des Sprühkopfes (7) angeordnet ist, daß die Auslaßöffnung des Sprühkopfes (7) nur teilweise von dem topfförmig ausgebildeten Meßelement belegt ist, und daß im Innern des Sprühkopfes wenigstens eine Elektrode (12, 13) befestigt ist, deren unteres Ende in dem topfförmigen Element (15) unterhalb des oberen Randes des erhabenen Wandabschnittes angeordnet ist, wobei die Elektrode (12, 13) elektrisch mit der elektrischen Detektorschaltung (14) verbunden ist.

2. Gerät nach Anspruch 1, dadurch gekennzeichnet, daß der Sprühkopf eine perforierte Platte aufweist, die die gesamte Auslaßöffnung des Sprühkopfs (7) bedeckt, daß ein Teil der Platte mit kleineren Perforationen (16) versehen ist, daß dieser Teil den ebenen Abschnitt des topfförmigen Elements (15) darstellt, und daß der erhabene Wandabschnitt des topfförmigen Elements (15) an der perforierten Platte um den Plattenabschnitt befestigt ist.

3. Gerät nach Anspruch 1 oder 2, dadurch gekennzeichnet, daß wenigstens ein Teil des Sprühkopfes aus einem elektrisch nicht-leitenden Material besteht, und daß zwei Elektroden (12, 13) vorgesehen sind, die beide mit der elektrischen Detektorschaltung (14) verbunden sind.

4. Gerät nach einem der vorangehenden Ansprüche, welche eine Wasserversorgungseinheit (1, 3, 10) aufweist, mittels der ein vorbestimmtes Wasservolumen dem Durchflußerhitzer (5) unter Regelung einer Regeleinheit (14) zugeführt werden kann, dadurch gekennzeichnet, daß die elektrische Elektrode oder die elektrischen Elektroden (12, 13) nur durch die elektrische Detektorschaltung (14) aktiviert werden, nachdem die Abgabe des vorbestimmten Wasservolumens von der Wasserversorgungseinheit zu dem Durchflußerhitzer (5) durch die Regeleinheit (14) beendet wird.

5. Gerät nach Anspruch 4, dadurch gekennzeichnet, daß die Regeleinheit (14) ein Zeitmeßschaltung aufweist, die die Elektrode oder die Elektroden (12, 13) nur aktiviert, nachdem eine vorbestimmte Verzögerungzeit nach der Beendigung der Abgabe des Wassers von der Wasserzufuhreinheit (1, 3, 10) zu dem Durchflußerhitzer (5) durch die Regeleinheit (14) verstrichen ist.

6. Gerät nach einem der vorangehenden Ansprüche, dadurch gekennzeichnet, daß die Detektorschaltung durch die Elektrodensignale aktiviert wird, um ein Alarmsignal zu erzeugen, und daß die Erzeugung des Alarmsignales fortgesetzt wird, bis der Benutzer die Detektorschaltung durch hierfür vorgesehene Einrichtungen zurücksetzt.

7. Gerät nach einem der vorangehenden Ansprüche, dadurch gekennzeichnet, daß das topfförmige Element (15) einteilig mit dem Sprühkopf ausgebildet ist.

**Revendications**

1. Appareil pour la préparation de boissons, comprenant des moyens de chauffage et une tuyauterie de remontée (6) s'étendant vers le haut entre les moyens de chauffage et une tête de pulvérisation (7), un élément de mesure (15) recevant au moins une partie de l'eau s'écoulant de la tuyauterie de remontée, cet élément de mesure comprenant une partie plate perforée (15a), une partie formant paroi verticale (15b) et un circuit électrique de détection (14), caractérisé en ce que les moyens de chauffage sont un réchauffeur en ligne (5), que l'élément de mesure est positionné dans l'ouverture de sortie de la tête de pulvérisation (7), que l'ouverture de sortie de la tête de pulvérisation (7) n'est que partiellement occupée par l'élément de mesure conformé en coupelle, et qu'au moins une électrode (12, 13) est fixée à l'intérieur de la tête de pulvérisation, l'extrémité inférieure de cette électrode étant positionnée à l'intérieur de l'élément en forme de coupelle (15) en-dessous du bord supérieur de la partie formant paroi verticale, cette électrode (12, 13) étant reliée électriquement au circuit électrique de détection (14).

2. Appareil selon la revendication 1, caractérisé en ce que la tête de pulvérisation comprend une plaque perforée recouvrant toute l'ouverture de sortie de la tête de pulvérisation (7), une partie de cette plaque étant munie de perforations (16) plus petites et constituant la partie plate de l'élément en forme de coupelle (15), la partie formant paroi verticale de l'élément en forme de coupelle (15) étant fixée à la plaque perforée à la périphérie de ladite partie plate.

3. Appareil selon l'une des revendications 1 ou 2, caractérisé en ce qu'au moins une partie de la tête de pulvérisation est en matériau électriquement non-conducteur, et en ce qu'il y a deux électrodes (12, 13) reliées toutes deux au circuit électrique de détection (14).

4. Appareil selon l'une des revendications précédentes, comprenant une unité d'alimentation en eau (1, 3, 10) au moyen de laquelle on peut fournir au réchauffeur en ligne (5) un volume d'eau prédéterminé à la commande d'un élément de commande (14), caractérisé en ce que les électrodes électriques (12, 13) sont activées par le circuit électrique de détection (14) uniquement après la fin, commandée par l'élément de commande (14), de la fourniture au réchauffeur en ligne (5) du volume prédéterminé d'eau venant de l'unité d'alimentation en eau.

5. Appareil selon la revendication 4, caractérisé en ce que l'élément de commande (14) comprend un circuit de mesure du temps pour activer les électrodes (12, 13) uniquement après l'écoulement d'un laps de temps prédéterminé après la fin, commandée par l'élément de commande (14), de la fourniture au réchauffeur en ligne (5) de l'eau venant de l'unité d'alimentation en eau (1, 3, 10).

6. Appareil selon l'une des revendications précédentes, caractérisé en ce que le circuit de détection est activé par les signaux des électrodes afin de générer un signal d'alarme, ce signal d'alarme étant maintenu jusqu'à ce que l'utilisateur réinitialise le circuit de détection par des moyens prévus à ce effet.

7. Appareil selon l'une des revendications précédentes, caractérisé en ce que l'élément en forme de coupelle (15) fait partie intégrante de la tête de pulvérisation.

fig-1

fig-2